# EUROPÄISCHE PATENTSCHRIFT

(11) **EP 2 976 265 B1**
(45) Veröffentlichungstag und Bekanntmachung des Hinweises auf die Patenterteilung: **07.06.2017**
(21) Anmeldenummer: 14707738.2
(22) Anmeldetag: 28.02.2014
(51) Int. Cl.: B65B 51/26, B65B 61/04, B29C 65/74, B29C 65/00, B29C 65/18, B29C 65/02, B65B 51/30, B65B 61/06

(54) **VORRICHTUNG UND VERFAHREN ZUM SIEGELN UND TRENNEN EINES PACKSTOFFS**
DEVICE AND METHOD FOR SEALING AND CUTTING A PACKAGING MATERIAL
DISPOSITIF DE PROCÉDÉ POUR SCELLER ET COUPER UN MATÉRIAU D'EMBALLAGE

(30) Priorität: 20.03.2013 DE 102013204909
(43) Veröffentlichungstag der Anmeldung: 27.01.2016
(73) Patentinhaber: Robert Bosch GmbH, 70442 Stuttgart (DE)
(72) Erfinder: GREIF, Tobias, 71522 Backnang (DE); STADEL, Hans-Peter, 73547 Lorch (DE); HIELTSCHER, Uwe, 76351 Linkenheim-Hochstetten (DE)
(86) Internationale Anmeldenummer: PCT/EP2014/053979
(87) Internationale Veröffentlichungsnummer: WO 2014/146886

(56) Entgegenhaltungen:
- EP-A1- 0 661 209
- DE-C1- 19 537 833
- US-A- 2 826 021
- US-A1- 2002 170 272

## Beschreibung

### Stand der Technik

Die Erfindung geht aus von einer Vorrichtung und einem Verfahren zum Trennen eines Packstoffs nach der Gattung der unabhängigen Ansprüche. Eine gattungsgemäße Vorrichtung ist bereits offenbart in der DE 10 2010 043 090 A1. Die darin beschriebene Vorrichtung zum Trennen eines Packstoffs umfasst eine Ultraschall-Schweißvorrichtung mit einer Sonotrode und einen Amboss zum Sigeln des Packstoffs, wobei die Sonotrode um eine erste Rotationsachse drehbar ist und der Amboss um eine zweite Rotationsachse drehbar ist. Eine Schneidvorrichtung umfasst mindestens ein Messer zum Trennen des Packstoffs und ist im Amboss angeordnet. Das Messer besitzt eine Schneide mit einer Schneidkante, die zumindest zwei Spitzen und zumindest zwei geschwungene Abschnitte umfasst, die die beiden Spitzen miteinander verbinden. Aus der DE 1 586 328 A1 ist bereits ein Verfahren zum Entlasten der Querschweißnaht bekannt. Zur Erzeugung der Quernaht bei einer Schlauchbeutelmaschine besteht eine Schweiß- und Transportzange aus zwei gabelförmigen Klemmbacken, zwischen denen mittig ein horizontaler Schweißdraht angeordnet ist. Der beheizte Schweißdraht ist zum Schweißen und Trennen der Querschweißnaht vorgesehen. Aus der DE 27 26 875 A1 ist ein Plastikbeutel sowie ein Verfahren und eine Vorrichtung zu seiner Herstellung offenbart. Zur Erzeugung der Tragegriffkontur ist ein erwärmbarer Draht vorgesehen, der sich durch den Beutel schmilzt, wenn er abwärts gedrückt wird.

Aus der US 2002/0170272 A1 ist bereits eine Siegelvorrichtung für Beutelverpackungen bekannt. Hierzu weist zumindest eine Siegelbacke eine Ausnehmung auf, in der ein Schneidmittel angeordnet ist. Nach dem Siegeln wird das Schneidmittel in Richtung zum gegenüberliegenden Siegelbacken verschwenkt, um die Siegelnaht zu trennen.

Aus der DE 195 37 833 C1 ist bereits eine Quernahtsiegeleinrichtung an einer Schlauchbeutelmaschine bekannt. Diese Einrichtung umfasst Klemmbacken sowie Siegelbacken. Zunächst werden die Klemmbacken von beiden Seiten her gegen einen Schlauchendabschnitt gegeneinander bewegt, um diesen zusammenzudrücken. Mit einer geringen Verzögerung werden dann auch die beiden Siegelbacken gegeneinander gefahren, sodass sie mit ihrer ebenen Siegelfläche den Schlauchabschnitt auf einer bestimmten Breite verpressen und durch Übertragung von Wärme eine Quernaht bilden. Nach einer bestimmten Siegelzeit fahren die Siegelbacken in ihre Ausgangsstellung zurück. Sobald der Zwischenraum frei ist, wird ein Trennmesser aus einem Durchbruch in einer der Klemmbacken gegen die Mitte der am Schlauchabschnitt angebrachten Quernaht vorgestoßen und wieder zurückgezogen, sodass diese der Länge nach durchtrennt wird.

Aus der US 2826021 A ist ebenfalls eine Siegelvorrichtung offenbart. Hierbei sind in den Siegelbacken Ausnehmungen vorgesehen, in denen ein Messer über eine Schwenkbewegung geführt werden kann.

Der Erfindung liegt die Aufgabe zugrunde, eine Vorrichtung und ein Verfahren anzugeben, bei denen sich insbesondere im Bereich der Trennlinie einer Verpackung keine Produktrückstände in diesem Bereich ansammeln können. Diese Aufgabe wird gelöst durch die Merkmale der unabhängigen Ansprüche.

### Vorteile der Erfindung

Die erfindungsgemäße Vorrichtung und das erfindungsgemäße Verfahren nach den Merkmalen der unabhängigen Ansprüche weist dem gegenüber den Vorteil auf, dass sich zwischen der Trennlinie der Schweißnaht der Verpackung keine Produktrückstände ansammeln können. Dies verhindert die Kontamination mit Sauerstoff. Auch die Verunreinigung von Produkten durch Verschleppung bei der Verpackung können dadurch verhindert werden. Hierzu ist ein Schwenkmechanismus vorgesehen ist, welcher das Schneidmittel relativ zur Siegelfläche verschwenkt. Damit wird sichergestellt, dass das Schneidmittel während des Siegelvorgangs nicht den Siegelvorgang beeinträchtigt und andererseits nach dem Siegeln in den Siegelbereich eingeschwenkt werden kann zum späteren Durchtrennen des vollständig gesiegelten Bereichs.

In einer zweckmäßigen Weiterbildung ist vorgesehen, dass das Schneidmittel und/oder der Schwenkmechanismus mit zumindest einer Siegelbacke verbunden sind bzw. ist. Dadurch kann das Schneidmittel im Sinne eines Schneidens unmittelbar durch die Siegelbacke betätigt werden, indem die eine Siegelbacke das Schneidmittel gegen die andere Siegelbacke drückt und somit den Packstoff durchtrennt. Auch eine Überlagerung der Einschwenkbewegung und der Schließbewegung wird nun möglich und erhöht die Schnelligkeit des Trennvorgangs.

In einer zweckmäßigen Weiterbildung ist zumindest ein Zentriermittel vorgesehen, das im eingeschwenkten Zustand die Position des Schneidmittels relativ zu zumindest einer Siegelbacke festlegt. Dadurch erhöht sich die Genauigkeit des Trennvorgangs, da das Schneidmittel immer in dieselbe Position der Siegelbacke eingeschwenkt wird. Bevorzugt ist als Zentriermittel zumindest eine Kerbe an zumindest einer der Siegelbacken vorgesehen. Die Geometrie der Kerbe entspricht der Außengeometrie des Schneidmittels, so dass sich die Positionsgenauigkeit des Schneidmittels relativ zur Schweißbacke verbessert.

In einer zweckmäßigen Weiterbildung ist vorgesehen, dass sich ein Querschnitt des Schneidmittels ändert, insbesondere von einem vieleckigen, bevorzugt dreieckigen, Querschnitt im Bereich einer Schneidlinie in einen runden Querschnitt übergeht. Ein runder Querschnitt eignet sich für die Zentrierung.

In einer zweckmäßigen Weiterbildung ist vorgesehen, dass das Schneidmittel u-förmig oder bügelförmig ausgebildet ist mit einem mittleren Bereich und zwei seitlichen Bereichen, wobei eine Schneidlinie zumindest teilweise in dem mittleren Bereich angeordnet ist, während das Schneidmittel in zumindest einem der seitlichen Bereichen mit dem Schwenkmechanismus verbunden ist. Bei einer einfachen Geometrie des Schneidmittels kann ein schnelles und positionsgenaues Einschwenken des Schneidmittels erreicht werden.

In einer zweckmäßigen Weiterbildung ist vorgesehen, dass der Schwenkmechanismus zumindest eine Schubkurbel und/oder zumindest einen Hebel und/oder eine Drehachse umfasst. Durch den gewählten Schwenkmechanismus lässt sich eine im Wesentlichen rechteckförmige Bewegung erzielen, die das Schneidmittel besonders nahe um die untere rechteckförmige Kante der Siegelbacke herum führt. Dadurch müssen die Siegelbacken nicht sehr weit geöffnet werden, damit das Einschwenken des Schneidmittels in den Bereich der Siegelflächen erfolgen kann. Gerade bei Heißsiegelverfahren können so die Wärmeverluste reduziert werden, die durch weites Öffnen der Siegelbacken entstünden.

In einer zweckmäßigen Weiterbildung weisen die Siegelflächen der Siegelbacken ein ungeteiltes Profil auf. Als ungeteiltes Profil wird verstanden, dass die Siegelflächen im Wesentlichen plan bzw. vollflächig ohne Vertiefungen in der Weise ausgeführt sind, dass im Bereich der Siegelflächen auch tatsächlich zwei Folien vollständig miteinander verschweißt werden, so dass keine ungesiegelten Bereiche verbleiben. Das Schneidmittel wird nach erfolgtem vollflächigen Siegeln zwischen die Siegelflächen gebracht zum Trennen des gesiegelten Packstoffs. Durch diese Art des Schneidens und der Ausgestaltung der Siegelflächen ist gewährleistet, dass insbesondere die Quernähte durch eine Schlauchbeutelmaschine komplett versiegelt werden, da nun das Schneidmittel nicht mehr wie sonst oft üblich in das Profil der Siegelbacke in einer Vertiefung integriert ist und dadurch in den Stellen um diese Vertiefung nicht vollflächig versiegelt wird.

Die Vorrichtung und das Verfahren finden besondere Verwendung zur Siegelung einer Quernaht eines Schlauchbeutels.

Das erfindungsgemäße Verfahren zeichnet sich durch folgende Schritte aus:
- Schließen der Siegelbacken
- Vollflächiges Versiegeln des Packstoffs
- Öffnen der Siegelbacken
- Einschwenken des Schneidmittels zwischen die Siegelflächen
- Drücken des Schneidmittels gegen den versiegelten Packstoff, vorzugsweise durch Bewegen zumindest einer Siegelbacke, so dass der Packstoff durchtrennt wird,
- Herausschwenken des Schneidmittels aus dem Bereich zwischen den Siegelflächen.

Dadurch wird ein sicheres Trennen des Packstoffs erreicht bei einer vollflächigen Versiegelung.

Weitere zweckmäßige Weiterbildungen ergeben sich aus weiteren abhängigen Ansprüchen und aus der Beschreibung.

### Zeichnung

Ein Ausführungsbeispiel der erfindungsgemäßen Vorrichtung zum Trennen eines Packstoffs mit den zugehörigen unterschiedlichen Verfahrensschritten ist in der Zeichnung dargestellt und wird nachfolgend näher erläutert.

Es zeigen:
Figur 1 in einem ersten Schritt die Vorrichtung nach dem Ende des Packstoffvorzugs,
Figur 2 in einem zweiten Schritt die Vorrichtung beim Siegeln der Quernaht,
Figur 3 das Einschwenken des Schneidmittels in einem dritten Schritt,
Figur 4 das Trennen des Packstoffes in einem vierten Schritt,
Figur 5 den Beginn des Packstoffvorzugs in einem fünften Schritt,
Figur 6 eine genauere Ansicht der Vorrichtung bei noch nicht eingeschwenktem Schneidmittel sowie
Figur 7 die Vorrichtung gemäß Figur 6 bei eingeschwenktem Schneidmittel.

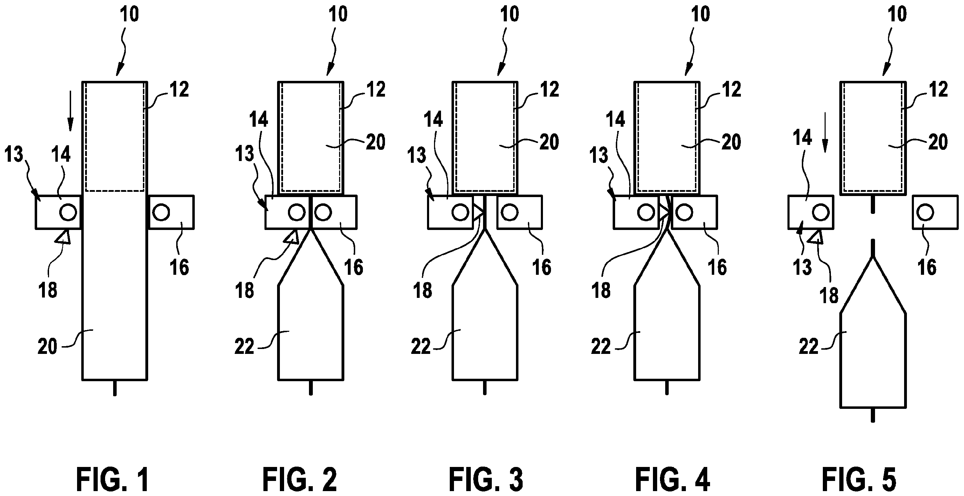

Gemäß Figur 1 weist eine Vorrichtung 10 zum Trennen eines Packstoffs 20 ein gestrichelt angedeutetes Formrohr auf. Um dieses Formrohr 12 wird der Packstoff 20 in Form eines Hüllstoffschlauchs gelegt. Die Längsnaht wurde bereits in einem vorhergehenden, nicht gezeigten Schritt gesiegelt. In einem ersten Schritt wird der Packstoff 20 in Pfeilrichtung so lange nach unten gezogen, bis sich die gewünschte Beutellänge einstellt. Zur Bildung einer Quernaht ist eine Siegelvorrichtung 13 vorgesehen. Die Siegelvorrichtung 13 besteht aus zumindest zwei relativ zueinander bewegbaren Siegelbacken 14, 16. An der ersten Siegelbacke 14 ist ein Schneidmittel 18 angeordnet. Befindet sich der Packstoff 20 in der gewünschten Position, werden in einem in Figur 2 dargestellten nachfolgenden zweiten Schritt die Siegelbacken 14, 16 geschlossen. Die Schließbewegung erfolgt senkrecht zur Richtung des Packstoffvorzugs. Durch das Schließen der Siegelbacken 14, 16 wird der Packstoff 20, der in Form eines Hüllstoffschlauchs um das Formrohr 12 gelegt ist, zusammengedrückt, so dass dadurch der Schlauchbeutel geschlossen wird. Der Packstoff 20 befindet sich zwischen der ersten Siegelfläche 15 der ersten Siegelbacke 14 und einer zweiten Siegelfläche 17 der zweiten Siegelbacke 16. Die Siegelflächen 15, 17 sind hierbei ungeteilt ausgeführt. Dies bedeutet, dass die Siegelflächen 15, 17 ein vollständiges Siegeln des Packstoffs 20 in dem Bereich gewährleisten, in dem der Packstoff 20 mit den Siegelflächen 15, 17 in Kontakt steht. Die Siegelflächen 15, 17 sind hierzu plan bzw. eben ausgeführt ohne Vertiefungen. Die Quernaht wird in dem zweiten Schritt wie in Figur 2 dargestellt, gesiegelt. In diesem Siegelvorgang wird die Kopfnaht eines hängenden Beutels 22 bzw. Verpackung und die Bodennaht des darüber liegenden Beutelbodens, der noch um das Formrohr 12 gefaltet ist, gebildet.

Nach erfolgter Quernahtsiegelung werden die Siegelbacken 14, 16 wieder auseinander bewegt, wie in Figur 3 dargestellt. In dieser Position wird das Schneidmittel 18 eingeschwenkt. Das Schneidmittel 18 ist hierbei mit der ersten Siegelbacke 14 verbunden. Im eingeschwenkten Zustand wie in Figur 3 dargestellt kann eine Schneidfläche des Schneidmittels 18 auf den gesiegelten Bereich des Packstoffs 20 einwirken. Der Trennvorgang wird in dem vierten Schritt in Figur 4 gezeigt. Hierbei wird das Schneidmittel 18 gegen den gesiegelten Bereich des Packstoffs 20 gedrückt. Dies erfolgt durch eine Relativbewegung der ersten Siegelbacke 14 relativ zu der zweiten Siegelbacke 16. Die zweite Siegelbacke 16 wirkt somit als Gegenfläche für den Schneidvorgang. Der Packstoff 20 wird im vierten Schritt vollständig durchtrennt.

Anschließend werden die Siegelbacken 14, 16 wieder auseinander bewegt wie in Figur 5 dargestellt. Der Siegelvorgang für die nächste Verpackung 22 kann beginnen. So wird im fünften Schritt wiederum der Packstoff 20 solange nach unten bewegt, bis die in Figur 1 gezeigte Position erreicht ist. Wie beschrieben schließt sich der Siegel- und Schneidvorgang an.

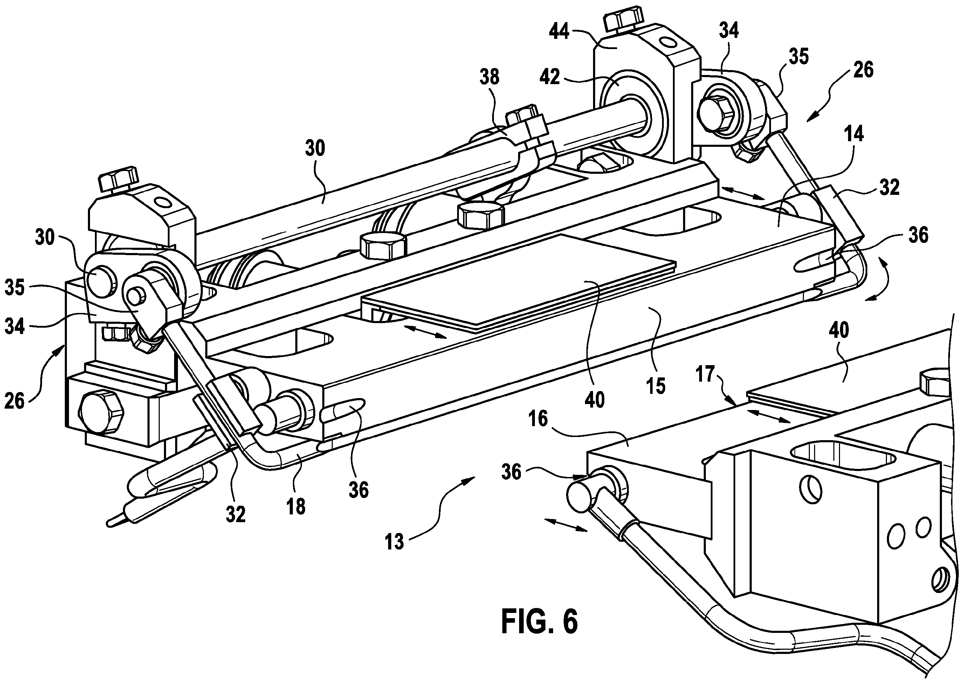

In Figur 6 ist die zugehörige Siegelvorrichtung 13 mit Schneidmittel 18 im Detail dargestellt. Die Siegelbacken 14, 16 sind in der Position der Figur 6 noch geöffnet, das Schneidmittel 18 ist noch nicht eingeschwenkt. An den Stirnseiten der Siegelbacken 14, 16 befinden sich die beiden Siegelflächen 15, 17. Die Siegelflächen 15, 17 sind plan in einer Ebene parallel zum Packstoff 20 ausgeführt und drücken beim Siegeln von beiden Seiten auf den nicht dargestellten Packstoff 20. Das Schneidmittel 18 verläuft in paralleler Ausrichtung zu den Siegelflächen 15, 17. Im Ausführungsbeispiel gemäß Figur 6 ist das Schneidmittel 18 als Schneiddraht ausgeführt. Das Schneidmittel 18 verläuft im Wesentlichen bügelförmig bzw. u-förmig mit einem mittleren Bereich und zwei seitlichen Bereichen. Eine Schneidlinie 28 ist zumindest teilweise in dem mittleren Bereich angeordnet. Das Schneidmittel 18 ist in zumindest einem der seitlichen Bereiche, bevorzugt in beiden seitlichen Bereichen, mit dem Schwenkmechanismus 26 verbunden.

Das Schneidmittel 18 ist im nicht eingeschwenkten Zustand unter der ersten Siegelbacke 14 angeordnet in einer Position, in der das Schneidmittel 18 nicht den Packstoff 20 berührt. Das Schneidmittel 18 weist eine Schneidlinie 28 auf, die im Ausführungsbeispiel als gerade Schneidkante ausgeführt ist. Die Schneidlinie 28 befindet sich im mittleren Abschnitt des u-förmigen Schneidmittels 18. Die Schneidlinie 28 wird gebildet durch einen im Wesentlichen dreieckförmigen Querschnitt des Schneidmittels 18. Die Schneidlinie 28 erstreckt sich beinahe entlang des gesamten Siegelbackens 14, 16, um sicher das Schneiden des gesiegelten Packstoffs 20 zu gewährleisten. Die Schneidlinie 28 könnte durch zwei ebene Flächen gebildet werden, die im Winkel von ca. 90° zueinander angeordnet sind. Auch andere Winkelbereiche sind möglich. Auch andere Schneidlinien 28 sind denkbar wie beispielsweise wellenförmige, bzw. keilförmige, die für abgerundete Ecken der Verpackung Verwendung finden. Auch andere Querschnitte des Schneidmittels 18 entlang der Schneidlinie 28, beispielsweise rechteckige oder vieleckige etc., sind möglich. Das Schneidmittel 18 ist aus Edelstahl bzw. gehärtetem Stahl. Geeignete andere Materialien, die die nötige Festigkeit aufweisen, sind gleichfalls möglich.

Kurz vor dem Eingriff mit der Siegelbacke 14, 16 geht der dreieckige Querschnitt des Schneidmittels 18 entlang der Schneidlinie 28 in einen runden Querschnitt über, der auch in den seitlichen Bügelbereichen des Schneidmittels 18 beibehalten wird. An der Stelle der Querschnittänderung wird das Schneidmittel 18 durch ein Zentriermittel 36 gegenüber der Siegelbacke 14, 16 zentriert. Hierzu ist das Zentriermittel 36 als Kerbe an den Seitenbereichen der Siegelbacken 14, 16 ausgebildet. Das Schneidmittel 18 gelangt beim Schließen der Siegelbacken 14, 16 in diese Kerbe 36 und wird so in eine definierte Position relativ zu den Siegelbacken 14, 16 gezwungen. Die Kerbe 36 verjüngt sich und endet in jedem Fall vor dem eigentlichen Siegelbereich des Packstoffs. Die Größe und Kontur der Kerbe 36 ist so gewählt, dass das Schneidmittel 18 in diesem Bereich ohne größeres Spiel aufgenommen wird. Das Zentriermittel 36 ist an beiden Seiten der Siegelbacken 14 vorgesehen. Das Zentriermittel 36 ist in der gleichen Weise auch an der zweiten Siegelbacke 16 angeordnet. Die Lage der Zentriermittel 36 auf den Siegelbacken 14, 16 wird so gewählt, dass der Packstoff 20 nicht über die Zentriermittel 36 geführt wird. Die Zentriermittel 36 befinden sich somit außerhalb der Siegelflächen 15, 17. Damit beeinträchtigen die Zentriermittel 36, insbesondere die Kerben, nicht das vollflächige Versiegeln des Packstoffs 20 zur Erstellung einer Kopfnaht und einer Bodennaht der Verpackung 22.

Das Schneidmittel 18 wird durch einen Schwenkmechanismus 26 bewegt. Der Schwenkmechanismus 26 ist mit der ersten Siegelbacke 14 fest verbunden. Der Schwenkmechanismus 26 ermöglicht eine Bewegung des Schneidmittels 18 relativ zur ersten Siegelbacke 14. Außerdem bewegt die Siegelbacke 14 selbst sowohl das Schneidmittel 18 wie auch den Schwenkmechanismus 26. Der Schwenkmechanismus 26 wird unter anderem gebildet durch eine Drehachse 30, die sich parallel zur Siegelfläche 15, 16 erstreckt. Die Drehachse 30 ist an beiden Enden jeweils durch ein Lager 42 gelagert. Eine das jeweilige Lager 42 aufnehmende Lageraufnahme 44 ist fest verbunden mit der ersten Siegelbacke 14. Die Drehachse 30 wird verdreht über einen Antriebshebel 38, der wiederum mit einem nicht näher gezeigten Antriebsmittel in Verbindung steht. An den Enden der Drehachse 30 ist seitlich jeweils ein Hebel 34 mit der Drehachse 30 verbunden, so dass eine Drehung der Drehachse 30 das Verschwenken des Hebels 34 bewirkt. An der anderen Seite des Hebels 34 ist ein Befestigungsmittel 35 vorgesehen, das drehbar im Hebel 34 gelagert ist und fest mit dem einen Ende des Schneidmittels 18 verbunden ist. Der seitliche Abschnitt des bügelförmigen Schneidmittels 18 ist in einer offenen Schubkurbel 32 verschieblich gelagert. Die Schubkurbel 32 ist schwenkbar mit der Schweißbacke 14 verbunden. Durch den gewählten Schwenkmechanismus 26 lässt sich eine im Wesentlichen rechteckförmige Bewegung erzielen, die das Schneidmittel 18 rund um die untere Kante der ersten Siegelbacke 14 herum führt. Dadurch müssen die Siegelbacken 14, 16 nicht weit geöffnet werden, damit das Einschwenken des Schneidmittels 18 in den Bereich der Siegelflächen 15, 17 erfolgen kann. Dieser Schwenkmechanismus 26 ist zwar vorteilhaft, könnte prinzipiell auch anders ausgebildet sein.

Oberhalb der Oberseite der Siegelbacken 14, 16 sind jeweils Produktabsperrungen 40 angeordnet. Die Produktabsperrung 40 umfasst vorzugsweise zwei relativ zueinander bewegliche Platten. Sie haben den Zweck, dass sie den Boden der nachfolgenden Verpackung 22 stützen, so dass sich der Boden nicht öffnet. Damit wird verhindert, dass kein in der Verpackung 22 befindliches Produkt in den Siegelbereich gelangt. Die Produktabsperrung 40 überdeckt somit zumindest die Siegelflächen 15, 17. Die Produktabsperrung 40 bzw. die beiden Platten werden zusammen mit den Siegelbacken 14, 16 bewegt. Die Produktabsperrung 40 kann bevorzugt voreilend gegenüber der Siegelbacke 14, 16 angeordnet sein. Die Produktabsperrung 40 bleibt also noch etwas geschlossen, wenn sich die Siegelbacken 14, 16 öffnen. Erst später öffnet sich die Produktabsperrung 40, um den Packstoff 20 für den nächsten Siegelvorgang ungehindert passieren zu lassen. Diese voreilende Lagerung der Produktabsperrung kann beispielsweise mittels einer Feder oder Ähnlichem realisiert werden.

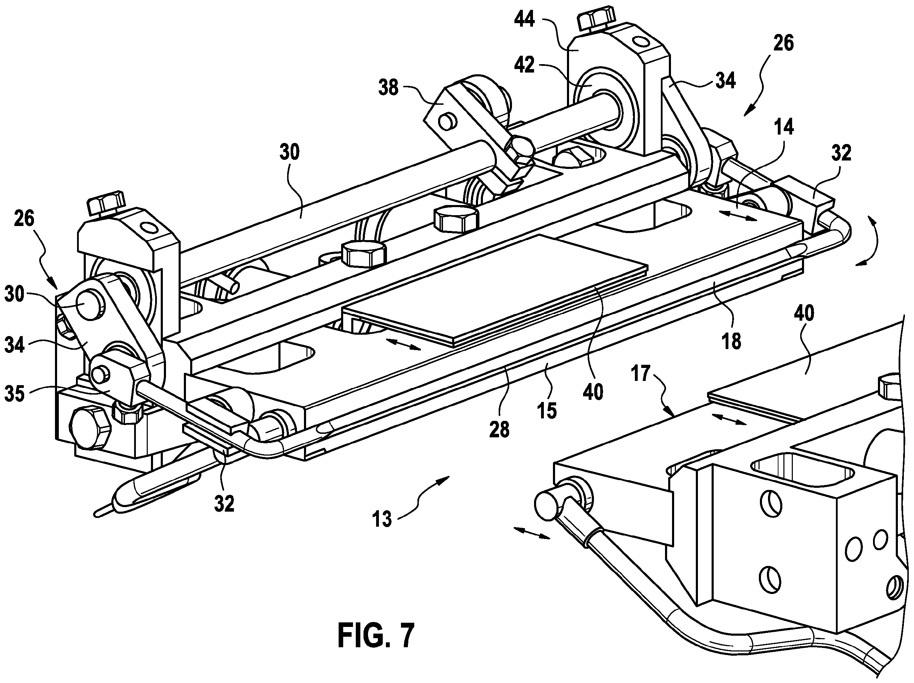

In Figur 7 ist nun der eingeschwenkte Zustand des Schneidmittels 18 gezeigt. Zum Einschwenken sind die Siegelbacken 14, 16 leicht geöffnet. Das Schneidmittel 18 wurde von dem Schwenkmechanismus 26 zwischen die Siegelflächen 15, 17 gebracht. Das Schneidmittel 18 befindet in den Zentriermitteln 36. Die Schneidlinie 28 ist mit ihrer Spitze zum Packstoff 20 bzw. der gegenüberliegenden Siegelbacke 16 orientiert. In diesem Zustand kann das Trennen des Packstoffs 20 erfolgen. Hierzu werden die Siegelbacken 14, 16 geschlossen. Dabei wird das Schneidmittel 18 zwischen den Siegelbacken 14, 16 geklemmt und die Schneidlinie 28 gegen den bereits gesiegelten Packstoff 20 gedrückt, dass dieser durchtrennt wird. Das Einschwenken des Schneidmittels 18 und das Schließen der Siegelbacken 14, 16 kann parallel oder nacheinander erfolgen.

Die Siegelflächen 15, 17 sind so ausgebildet, dass es bei einer Siegelung des Packstoffs 20 keine ungesiegelten Zonen gibt. Die Siegelflächen 15, 17 sind hierzu plan und eben ausgeführt. Insbesondere sind keine Ausnehmungen vorgesehen. Die Zentriermittel 36 liegen deshalb außerhalb der Siegelflächen 15, 17. Der Packstoff 20 weist in etwa eine Breite auf wie die Produktabsperrung 40.

Über die Siegelbacken 14, 16 mit ungeteilten Profilen der Siegelflächen 15, 17 wird die Kopfnaht einer hängenden Verpackung 22, insbesondere ein Schlauchbeutel, und die Bodennaht des Verpackungsbodens, welcher um das Mundstück des Formrohrs 12 gefaltet ist, als eine Naht gebildet. Dadurch wird sichergestellt, dass es keine ungesiegelte Zone zwischen den Nähten gibt. Im Anschluss wird der Trennprozess wie folgt bewerkstelligt. Nach der Versiegelung öffnen sich die Siegelbacken 14, 16 so weit, dass das unter der ersten Siegelbacke 14 stehende Schneidmittel 18 gerade zwischen Siegelnaht und erster Siegelbacke 14 eingeschwenkt werden kann. Durch erneutes Schließen der Siegelbacken 14, 16 wird das Schneidmittel 18 mit der Schneidlinie 28 voraus gegen die zweite Siegelbacke 16 gedrückt. Die dazwischen liegende Siegelnaht wird durchtrennt. Jetzt öffnen die Siegelbacken 14, 16 vollständig. Die hängende Verpackung 22 fällt herunter und der nächste Folienvorzug beginnt wie in Figur 1 beschrieben.

Zum Bewegen des Schneidmittels 18 ist ein nicht näher gezeigter Antrieb vorgesehen. Eine nicht näher gezeigte Abdeckung schützt den Antrieb und Teile des Schwenkmechanismus 26 vor Verschmutzungen.

Die beschriebene Vorrichtung und das beschriebene Verfahren eignen sich insbesondere für die Erstellung einer Quernaht und anschließendem Durchtrennen der Quernaht bei einer vertikalen Schlauchbeutelmaschine. Auch andere Verwendungen sind jedoch möglich.

## Patentansprüche

1. Vorrichtung zum Trennen eines Packstoffs (20) für eine Verpackung (22), umfassend zumindest eine Siegelvorrichtung (13) mit zwei relativ zueinander bewegbaren Siegelbacken (14, 16) mit zugehörigen Siegelflächen (15, 17), mit zumindest einem Schneidmittel (18) zum Trennen des Packstoffs (20), **dadurch gekennzeichnet, dass** zumindest ein Schwenkmechanismus (26) vorgesehen ist, der das Schneidmittel (18) nach dem Siegeln und nach dem Öffnen der Siegelbacken (14, 16) um eine Siegelbacke herum zwischen die Siegelflächen (15, 17) einschwenkt zum Trennen des gesiegelten Packstoffs (20), wobei zumindest eine Siegelbacke (14, 16) das Schneidmittel (18) gegen die andere Siegelbacke (14, 16) drückt, und das Schneidmittel (18) dabei den zwischen Schneidmittel (18) und Siegelbacke (14, 16) liegenden gesiegelten Packstoff (20) durchtrennt.

2. Vorrichtung nach Anspruch 1, **dadurch gekennzeichnet, dass** der Schwenkmechanismus (26) und/oder das Schneidmittel (18) mit zumindest einer Siegelbacke (14) verbunden ist.

3. Vorrichtung nach einem der vorhergehenden Ansprüche, **dadurch gekennzeichnet, dass** zumindest ein Zentriermittel (36) vorgesehen ist, das im eingeschwenkten Zustand die Position des Schneidmittels (18) relativ zu zumindest einer Siegelbacke (14, 16) festlegt.

4. Vorrichtung nach einem der vorhergehenden Ansprüche, **dadurch gekennzeichnet, dass** als Zentriermittel (36) zumindest eine Kerbe an zumindest einer der Siegelbacken (14, 16) vorgesehen ist.

5. Vorrichtung nach einem der vorhergehenden Ansprüche, **dadurch gekennzeichnet, dass** sich ein Querschnitt des Schneidmittels (18) ändert, insbesondere von einem vieleckigen, bevorzugt dreieckigen, Querschnitt im Bereich einer Schneidlinie (28) in einen runden Querschnitt übergeht.

6. Vorrichtung nach einem der vorhergehenden Ansprüche, **dadurch gekennzeichnet, dass** das Schneidmittel (18) u-förmig oder bügelförmig ausgebildet ist mit einem mittleren Bereich und zwei seitlichen Bereichen, wobei eine Schneidlinie (28) zumindest teilweise in dem mittleren Bereich angeordnet ist, während das Schneidmittel (18) in zumindest einem der seitlichen Bereichen mit dem Schwenkmechanismus (26) verbunden ist.

7. Vorrichtung nach einem der vorhergehenden Ansprüche, **dadurch gekennzeichnet, dass** der Schwenkmechanismus (26) zumindest eine Schubkurbel (32) und/oder zumindest einen Hebel (34) und/oder eine Drehachse (30) umfasst.

8. Vorrichtung nach einem der vorhergehenden Ansprüche, **dadurch gekennzeichnet, dass** die Siegelflächen (15, 17) ein ungeteiltes Profil aufweisen, insbesondere dass die Siegelflächen (15, 17) plan bzw. vollflächig ohne Vertiefungen ausgebildet sind.

9. Vorrichtung nach einem der vorhergehenden Ansprüche, **dadurch gekennzeichnet, dass** zumindest eine Produktabsperrung (40), insbesondere zumindest zwei Platten umfassend, vorgesehen ist, die mit zumindest einer Siegelbacke (14, 16) verbunden ist zur Abstützung einer Verpackung (22) während des Siegelns.

10. Verfahren zum Trennen eines Packstoffs (20) für eine Verpackung (22), umfassend folgende Schritte:
- der zu siegelnde Packstoff (20) wird in den Erfassungsbereich einer Siegelvorrichtung (13) gebracht,
- zwei Siegelbacken (14, 16) mit Siegelflächen (15, 17) der Siegelvorrichtung (13) werden geschlossen,
- der zwischen den Siegelflächen (15, 17) befindliche Packstoff (20) wird gesiegelt,
- die Siegelbacken (14, 16) werden geöffnet,
durch folgende nachfolgende Schritte gekennzeichnet,
- ein Schneidmittel (18) wird zwischen die Siegelflächen (15, 17) um eine Siegelbacke (14, 16) herum eingeschwenkt,
- das Schneidmittel (18) wird durch eine der Siegelbacken (14) gegen den gesiegelten Packstoff (20) und gegen die andere der Siegelbacken (16) gedrückt zum Trennen des gesiegelten Packstoffs (20).

11. Verfahren nach dem vorhergehenden Anspruch, **dadurch gekennzeichnet, dass** das Schneidmittel (18) durch zumindest eine Siegelbacke (14) und/oder einen Schwenkmechanismus (26) bewegt wird.

12. Verfahren nach einem der vorhergehenden Verfahrensansprüche, **dadurch gekennzeichnet, dass** beim Einschwenken des Schneidmittels (18) das Schneidmittel (18) relativ zu zumindest einer Siegelbacke (14, 16) zentriert wird.

13. Verfahren nach einem der vorhergehenden Verfahrensansprüche, **dadurch gekennzeichnet, dass** nach erfolgtem Trennen des Packstoffs (20) das Schneidmittel (18) wieder aus dem Siegelbereich herausgeschwenkt wird.

14. Verfahren nach einem der vorhergehenden Verfahrensansprüche, **dadurch gekennzeichnet, dass** der Packstoff (20) um ein Formrohr (12) gelegt wird, so dass sich ein Schlauchbeutel als Verpackung (22) bildet und der gesiegelte Packstoff (20) eine Kopfnaht und eine Bodennaht der Verpackung (22) bildet.

## Claims

1. Device for separating a packaging material (20) for a package (22), comprising at least one sealing device (13) having two sealing jaws (14, 16) that are movable in relation to one another and have associated sealing faces (15, 17), having at least one cutting means (18) for separating the packaging material (20),
**characterized in that**
at least one pivot mechanism (26) is provided which, after sealing and after opening of the sealing jaws (14, 16), for separating the sealed packaging material (20) pivots the cutting means (18) about a sealing jaw inwardly between the sealing faces (15, 17), wherein at least one sealing jaw (14, 16) presses the cutting means (18) against the other sealing jaw (14, 16), and the cutting means (18) herein severs the sealed packaging material (20) that lies between the cutting means (18) and the sealing jaw (14, 16).

2. Device according to Claim 1, **characterized in that** the pivot mechanism (26) and/or the cutting means (18) are/is connected to at least one sealing jaw (14).

3. Device according to one of the preceding claims, **characterized in that** at least one centring means (36) which in the inwardly pivoted state establishes the position of the cutting means (18) in relation to at least one sealing jaw (14, 16) is provided.

4. Device according to one of the preceding claims, **characterized in that** at least one notch on at least one of the sealing jaws (14, 16) is provided as the centring means (36).

5. Device according to one of the preceding claims, **characterized in that** a cross section of the cutting means (18) changes, in particular transitions from a polygonal, preferably a triangular, cross section in the region of a cutting line (28) to a round cross section.

6. Device according to one of the preceding claims, **characterized in that** the cutting means (18) is configured so as to be U-shaped or bracket-shaped, having one central region and two lateral regions, wherein a cutting line (28) at least in part is disposed in the central region, while the cutting means (18) in at least one of the lateral regions is connected to the pivot mechanism (26).

7. Device according to one of the preceding claims, **characterized in that** the pivot mechanism (26) comprises at least one slider crank (32) and/or at least one lever (34) and/or a rotation axis (30).

8. Device according to one of the preceding claims, **characterized in that** the sealing faces (15, 17) have an undivided profile, in particular **in that** the sealing faces (15, 17) are configured so as to be planar or fully planar without depressions, respectively.

9. Device according to one of the preceding claims, **characterized in that** at least one product barrier (40), comprising in particular at least two plates, which for supporting a package (22) during sealing is connected to at least one sealing jaw (14, 16) is provided.

10. Method for separating a packaging material (20) for a package (22), said method comprising the following steps:
- the packaging material (20) to be sealed is moved into the acquiring region of a sealing device (13);
- two sealing jaws (14, 16), having sealing faces (15, 17), of the sealing device (13) are closed;
- the packaging material (20) that is located between the sealing faces (15, 17) is sealed;
- the sealing jaws (14, 16) are opened,
said method **characterized by** the following steps:
- a cutting means (18) is pivoted about a sealing jaw (14, 16) inwardly between the sealing faces (15, 17);
- the cutting means (18) for separating the sealed packaging material (20) is pressed by one of the sealing jaws (14) against the sealed packaging material (20) and against the other of the sealing jaws (16).

11. Method according to the preceding claim, **characterized in that** the cutting means (18) is moved by at least one sealing jaw (14) and/or a pivot mechanism (26).

12. Method according to one of the preceding method claims, **characterized in that** the cutting means (18) is centred in relation to at least one sealing jaw (14, 16) when the cutting means (18) is inwardly pivoted.

13. Method according to one of the preceding method claims, **characterized in that** the cutting means (18) is outwardly pivoted from the sealing region again once the separation of the packaging material (20) has been performed.

14. Method according to one of the preceding method claims, **characterized in that** the packaging material (20) is placed around a shaping tube (12) such that a tubular bag is formed as the package (22), and the sealed packaging material (20) forms a top seam and a base seam of the package (22).

## Revendications

1. Dispositif pour couper un matériau d'emballage (20) pour un emballage (22), comprenant au moins un dispositif de scellage (13) avec deux mâchoires de scellage (14, 16) mobiles l'une par rapport à l'autre présentant des faces de scellage respectives (15, 17), avec au moins un moyen de coupe (18) pour couper le matériau d'emballage (20), **caractérisé en ce qu'**il est prévu au moins un mécanisme pivotant (26), qui fait pivoter le moyen de coupe (18) après le scellage et après l'ouverture des mâchoires de scellage (14, 16) autour d'une mâchoire de scellage entre les faces de scellage (15, 17) afin de couper le matériau d'emballage scellé (20), dans lequel au moins une mâchoire de scellage (14, 16) pousse le moyen de coupe (18) contre l'autre mâchoire de scellage (14, 16), et le moyen de coupe (18) coupe alors le matériau d'emballage scellé (20) situé entre le moyen de coupe (18) et la mâchoire de scellage (14, 16).

2. Dispositif selon la revendication 1, **caractérisé en ce que** le mécanisme pivotant (26) et/ou le moyen de coupe (18) sont reliés à au moins une mâchoire de scellage (14).

3. Dispositif selon l'une quelconque des revendications précédentes, **caractérisé en ce qu'**il est prévu au moins un moyen de centrage (36), qui dans l'état pivoté fixe la position du moyen de coupe (18) par rapport à au moins une mâchoire (14, 16).

4. Dispositif selon l'une quelconque des revendications précédentes, **caractérisé en ce qu'**il est prévu comme moyen de centrage (36) au moins une encoche sur au moins une des mâchoires de scellage (14, 16).

5. Dispositif selon l'une quelconque des revendications précédentes, **caractérisé en ce qu'**une section transversale du moyen de coupe (18) se modifie, en particulier évolue d'une section transversale polygonale, de préférence triangulaire dans la région d'une ligne de coupe (28) à une section transversale ronde.

6. Dispositif selon l'une quelconque des revendications précédentes, **caractérisé en ce que** le moyen de coupe (18) est réalisé en forme de U ou en forme d'étrier, avec une région centrale et deux régions latérales, dans lequel une ligne de coupe (28) est disposée au moins en partie dans la région centrale, tandis que le moyen de coupe (18) est relié au mécanisme pivotant (26) dans au moins une des régions latérales.

7. Dispositif selon l'une quelconque des revendications précédentes, **caractérisé en ce que** le mécanisme pivotant (26) comprend au moins une manivelle de poussée (32) et/ou au moins un levier (34) et/ou un axe de rotation (30).

8. Dispositif selon l'une quelconque des revendications précédentes, **caractérisé en ce que** les faces de scellage (15, 17) présentent un profil ininterrompu, en particulier **en ce que** les faces de scellage (15, 17) sont planes ou entièrement libres de creux.

9. Dispositif selon l'une quelconque des revendications précédentes, **caractérisé en ce qu'**il est prévu au moins un arrêt de produit (40), comprenant au moins deux plaques, qui est relié à au moins une mâchoire de scellage (14, 16) pour soutenir un emballage (22) pendant le scellage.

10. Procédé pour couper un matériau d'emballage (20) pour un emballage (22), comprenant les étapes suivantes:
- on amène le matériau d'emballage à sceller (20) dans la zone de saisie d'un dispositif de scellage (13),
- on ferme deux mâchoires de scellage (14, 16) avec des faces de scellage (15, 17) du dispositif de scellage (13),
- on scelle le matériau d'emballage (20) se trouvant entre les faces de scellage (15, 17),
- on ouvre les mâchoires de scellage (14, 16),
**caractérisé par** les étapes suivantes:
- on fait pivoter un moyen de coupe (18) entre les faces de scellage (15, 17) autour d'une mâchoire de scellage (14, 16),
- on pousse le moyen de coupe (18) au moyen d'une des mâchoires de scellage (14) contre le matériau d'emballage scellé (20) et contre l'autre des mâchoires de scellage (16) afin de couper le matériau d'emballage scellé (20).

11. Procédé selon la revendication précédente, **caractérisé en ce que** l'on déplace le moyen de coupe (18) au moyen d'au moins une mâchoire de scellage (14) et/ou d'un mécanisme pivotant (26).

12. Procédé selon l'une quelconque des revendications de procédé précédentes, **caractérisé en ce que** l'on centre le moyen de coupe (18) par rapport à au moins une mâchoire de scellage (14, 16) lors du pivotement du moyen de coupe (18).

13. Procédé selon l'une quelconque des revendications de procédé précédentes, **caractérisé en ce que** l'on fait de nouveau pivoter le moyen de coupe (18) hors de la zone de scellage après que la coupe du matériau d'emballage (20) ait été effectuée.

14. Procédé selon l'une quelconque des revendications de procédé précédentes, **caractérisé en ce que** l'on pose le matériau d'emballage (20) autour d'un tube de formage (12), de telle manière qu'il se forme un sachet en tuyau souple comme emballage (22) et que le matériau d'emballage scellé (20) forme une soudure de tête et une soudure de fond de l'emballage (22).
